# FASCICULE DE BREVET EUROPEEN

(11) **EP 1 168 768 B1**
(45) Date de publication et mention de la délivrance du brevet: **03.03.2010**
(21) Numéro de dépôt: 01401675.2
(22) Date de dépôt: 25.06.2001
(51) Int. Cl.: H04L 29/06, G05B 19/418

(54) **Bloc fonction WEB dans un équipement d'automatisme.**
Webfunktionsblocks bei automatisierungsgeräten
Web function block in automation equipment

(30) Priorité: 30.06.2000 FR 0008567
(43) Date de publication de la demande: 02.01.2002
(73) Titulaire: Schneider Automation, 06560 Valbonne (FR)
(72) Inventeur: Hardy, Christian, 83340 Le Thoronet (FR); Vincent, Christophe, 06550 La Roquette-Sur-Siagne (FR); Stawikowski, Jean-Marie, 06600 Antibes (FR); Rousseau, Robert, 06600 Antibes (FR)
(74) Mandataire: Dufresne, Thierry

(56) Documents cités:
- WO-A-99/13418
- WO-A-99/63409
- BABB M: "IEC 1131-3: A STANDARD PROGRAMMING RESOURCE FOR PLCS" CONTROL ENGINEERING INTERNATIONAL,US,CAHNERS PUBLISHING, vol. 43, no. 2, 1 février 1996 (1996-02-01), pages 67-68,75-76, XP000581070 ISSN: 0010-8049
- D. BOX, D. EHNEBUSKE, G. KAKIVAYA ET AL.: "Simple Object Access Protocol (SOAP) version 1.1" WWW.W3.ORG, 8 mai 2000 (2000-05-08), XP002163943

## Description

La présente invention concerne un système de communication d'un équipement d'automatisme sur un réseau global de type Internet, Intranet ou Extranet, permettant d'implémenter une fonction serveur WEB et une fonction client WEB à l'intérieur d'une application d'automatisme, grâce à au moins un bloc fonction WEB pouvant interagir avec le programme de l'application d'automatisme. La présente invention concerne également un équipement d'automatisme intégrant un tel système de communication ainsi qu'une station de programmation capable de paramétrer des blocs fonction WEB. Ce système de communication peut s'appliquer à toute application appartenant au domaine des automatismes industriels, des automatismes du bâtiment ou du contrôle/commande des réseaux électriques de distribution.

Sous le terme "équipement d'automatisme", on désignera ci-après un automate programmable, une station de contrôle/commande, une commande numérique ou tout équipement pouvant contenir et dérouler un programme utilisateur contrôlant une application d'automatisme. Ce programme utilisateur, appelé encore programme application, est chargé de faire du contrôle et de la commande d'une application d'automatisme au moyen notamment d'entrées/sorties pilotées par ce programme application. Il est élaboré par un concepteur et est écrit dans un ou plusieurs langages graphiques d'automatisme intégrant notamment des schémas à contacts, (langage Ladder), des diagrammes fonctionnels en séquence (Sequential Function Chart ou langage Grafcet), des blocs fonctions (Function Block Description) ou bien dans des langages textuels d'automatisme de type IL (Instruction List) ou ST (Structured Text). Ces langages d'automatisme sont avantageusement conformes à la norme IEC1131-3, de façon à faciliter la programmation par un concepteur automaticien ne maîtrisant pas forcément les langages informatiques. Ils sont utilisables sur des stations de programmation qui sont des équipements informatiques, notamment ordinateurs personnels de type PC, connectables à l'équipement d'automatisme à programmer.

Il est déjà connu qu'un tel équipement d'automatisme puisse intégrer un serveur WEB de façon à pouvoir échanger des données relatives à cet équipement d'automatisme avec un client WEB distant, tel qu'un navigateur, connecté à un réseau global de type Internet, Intranet ou Extranet, conforme à la norme TCP/IP, appelé ci-après réseau TCP/IP. Ces fonctionnalités sont décrites notamment dans les document WO 99/63409, WO9913418, US6061603 et US5805442. Les données relatives à l'équipement d'automatisme sont alors mises en forme et expédiées par le serveur WEB, par exemple sous forme de pages HTML ou XML. Il est également possible qu'un serveur WEB implanté dans un équipement d'automatisme charge un programme, généralement appelé Applet, dans un client WEB, lequel programme se déroule dans le client WEB de façon à échanger avec le serveur WEB de l'équipement d'automatisme des requêtes transportées par le protocole TCP/IP.

Cependant, ces solutions sont plus orientées vers l'utilisation d'un navigateur (ou browser) et ne permettent pas au concepteur d'une application d'automatisme de maîtriser les données échangées sur le réseau TCP/IP. En effet, le concepteur n'a pas la possibilité de créer, directement à partir du programme application, une communication client-serveur sur le réseau TCP/IP.

Or, cette fonctionnalité serait intéressante dans certains cas, pour communiquer sur un réseau TCP/IP afin de recevoir des commandes ou des requêtes de la part d'un client WEB distant et de répondre à ces requêtes, en maîtrisant les données échangées sur le réseau TCP/IP. De plus, il serait intéressant qu'un programme application puisse se comporter comme un client WEB actif et être capable d'envoyer des requêtes et de recevoir des données d'un serveur WEB distant. On pourrait ainsi mettre en place une communication sur un réseau TCP/IP entre le programme application d'un équipement d'automatisme et un serveur WEB / client WEB distant, tel qu'un ERP, pour échanger par exemple des ordres et des comptes-rendus de fabrication.

Pour cela, l'invention décrit un système de communication d'un équipement d'automatisme sur un réseau TCP/IP qui comprend des moyens d'échanges pour implémenter une fonction serveur WEB ou une fonction client WEB à l'intérieur d'un programme application d'une application d'automatisme chargé dans l'équipement d'automatisme, ces moyens d'échanges comportant au moins un bloc fonction WEB qui peut interagir avec le programme application, celui-ci pouvant être écrit dans un ou plusieurs langages conformes à la norme IEC1131-3. Le système de communication comprend au moins un bloc fonction WEB réception pour implémenter une fonction serveur WEB et/ou au moins un bloc fonction WEB émission pour implémenter une fonction client WEB dans un programme application.

Le système de communication comprend également une interface HTTP frontale dans l'équipement d'automatisme capable de faire d'une part l'acheminement des messages provenant du réseau TCP/IP vers un bloc fonction WEB réception identifié par une adresse URL, et d'autre part l'acheminement des messages provenant d'un bloc fonction WEB émission vers une adresse URL sur le réseau TCP/IP.

L'invention décrit également un équipement d'automatisme intégrant un tel système de communication ainsi qu'une station de programmation permettant à un concepteur d'une application d'automatisme de visualiser, d'insérer, de supprimer, de modifier et de paramétrer au moins un bloc fonction WEB intégré dans un programme application, dans le but de mettre en oeuvre le système de communication décrit.

Ainsi, grâce à la présente invention, on pourra également mettre en place une communication directe utilisant les capacités du WEB, entre les programmes application de plusieurs équipements d'automatisme distants, par exemple pour faire de la synchronisation de fabrication. Si cette communication est mise en place dans des programmes application d'équipements d'automatisme en utilisant des langages qui sont régulièrement utilisés par les concepteurs de ces programmes application, à savoir les langages conformes à la norme IEC1131-3, alors cela leur permettra avantageusement de concevoir très facilement des applications d'automatisme distribuées sur le WEB.

De même, il sera désormais possible d'insérer dans un architecture WEB des équipements d'automatisme actuels en modifiant légèrement leurs programmes application.

D'autres caractéristiques et avantages vont apparaître dans la description détaillée qui suit en se référant à un mode de réalisation donné à titre d'exemple et représenté par les dessins annexés sur lesquels :
- la figure 1 représente un premier exemple de communication d'un équipement d'automatisme suivant un système de communication conforme à l'invention avec un appareil client,
- la figure 2 représente un deuxième exemple de communication dans lequel un équipement d'automatisme communique avec un équipement à la fois client et serveur,
- la figure 3 montre un troisième exemple de communication entre deux équipements d'automatisme, .
- les figures 4 et 5 détaillent respectivement un bloc fonction WEB réception et un bloc fonction WEB émission dans une représentation de type schémas à contacts (langage LADDER).

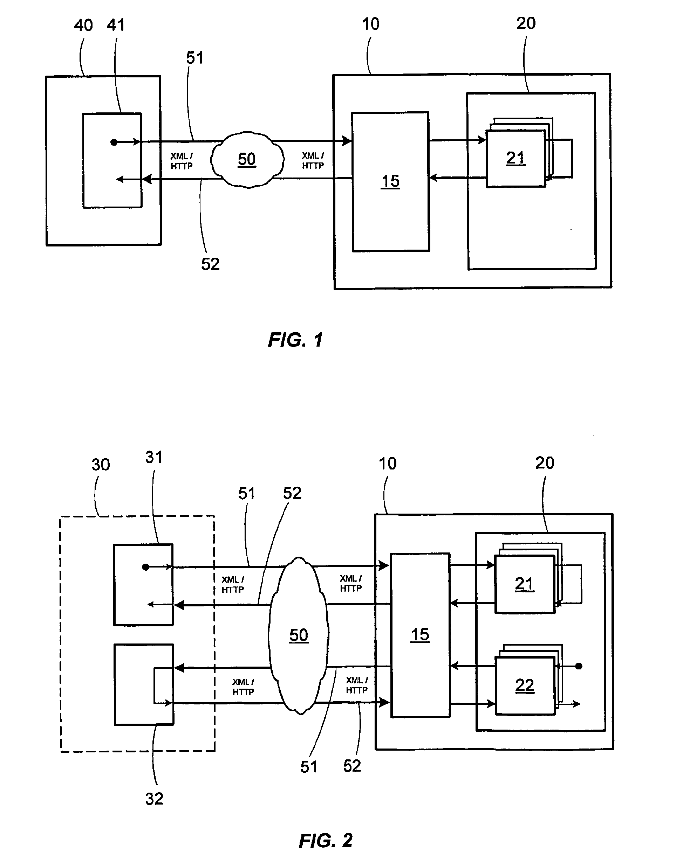

La figure 1 montre un équipement d'automatisme 10 communiquant avec un appareil 40 sur un réseau TCP/IP 50. L'équipement d'automatisme 10 comprend une interface HTTP 15 frontale et un programme application 20. L'appareil 40 comprend un module client 41, qui peut être un navigateur WEB, capable d'émettre sur le réseau TCP/IP 50 des requêtes 51 conformes au protocole HTTP, contenant une adresse URL destinataire et de recevoir des réponses 52 conformes au protocole HTTP. Le contenu d'une requête HTTP 51 ou d'une réponse HTTP 52 peut être codé sous différentes formes, telles que par exemple une trame XML, une trame URL encodé ("URL encoded"), une trame HTML, WML, SOAP ou d'autres formats ASCII ou binaires.

La figure 2 montre un équipement d'automatisme 10 communiquant d'une part avec un module client WEB 31 capable d'émettre sur le réseau TCP/IP 50 des requêtes HTTP 51 et de recevoir des réponses HTTP 52, et d'autre part avec un module serveur WEB 32 capable de recevoir des requêtes HTTP 51 en provenance du réseau TCP/IP 50 et de renvoyer des réponses HTTP 52. Les modules client WEB 31 et serveur WEB 32 peuvent éventuellement appartenir à un même équipement 30 connecté au réseau TCP/IP 50 et comportant, par exemple, une application ERP (Enterprise Resource Planning).

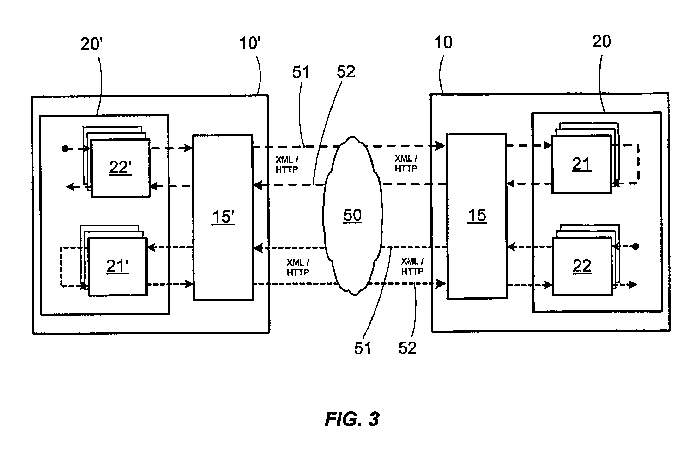

La figure 3 montre deux équipements d'automatisme 10,10' qui communiquent entre eux sur un réseau TCP/IP 50. Chaque équipement d'automatisme 10,10' comprend une interface HTTP 15,15' frontale et un programme application 20,20'.

Un programme application 20,20' est chargé de faire du contrôle/commande d'une application d'automatisme au moyen d'entrées/sorties pilotées par ce programme application. Il est élaboré par un concepteur et est écrit dans un ou plusieurs langages intégrant notamment des schémas à contacts (LD), des diagrammes fonctionnels en séquence (SFC), des listes d'instructions (IL), de la programmation structurée (ST) ou des blocs fonctions (BF). Ces langages sont de préférence conformes à la norme IEC1131-3, de façon à faciliter la programmation par un concepteur automaticien, ne maîtrisant pas forcément les langages informatiques.

Un des objets de l'invention est d'intégrer dans un programme application 20 (respectivement 20') des moyens d'échanges permettant au concepteur du programme application d'ouvrir une communication sur le réseau TCP/IP 50. Pour cela, le système de communication décrit dans l'invention comprend au moins un bloc fonction WEB 21,22 (respectivement 21',22') configurable et pouvant interagir avec le programme application 20 (respectivement 20') d'un équipement d'automatisme 10 (respectivement 10'). Selon un mode de réalisation préféré, on peut envisager deux types distincts de blocs fonction WEB : un premier type est appelé bloc fonction WEB réception 21 (respectivement 21') et permet d'implémenter une fonction serveur WEB dans le programme application 20 (respectivement 20') et un second type est appelé bloc fonction WEB émission 22 (respectivement 22') et permet d'implémenter une fonction client WEB dans le programme application 20 (respectivement 20').
Ainsi, grâce à un bloc fonction WEB réception 21, le programme application 20 d'un équipement d'automatisme 10 est en attente d'une requête HTTP 51 émanant d'un client WEB, tel qu'un module client WEB 31,41 ou un bloc fonction WEB émission 22' d'un programme application 20' d'un équipement d'automatisme 10', et renvoie une réponse HTTP 52 à cette requête 51. Grâce à un bloc fonction WEB émission 22, le programme application 20 d'un équipement d'automatisme 10 peut prendre l'initiative d'émettre une requête 51 vers un module serveur WEB 32 ou vers un bloc fonction WEB réception 21' d'un programme application 20', et attend une réponse HTTP 52 à cette requête 51.

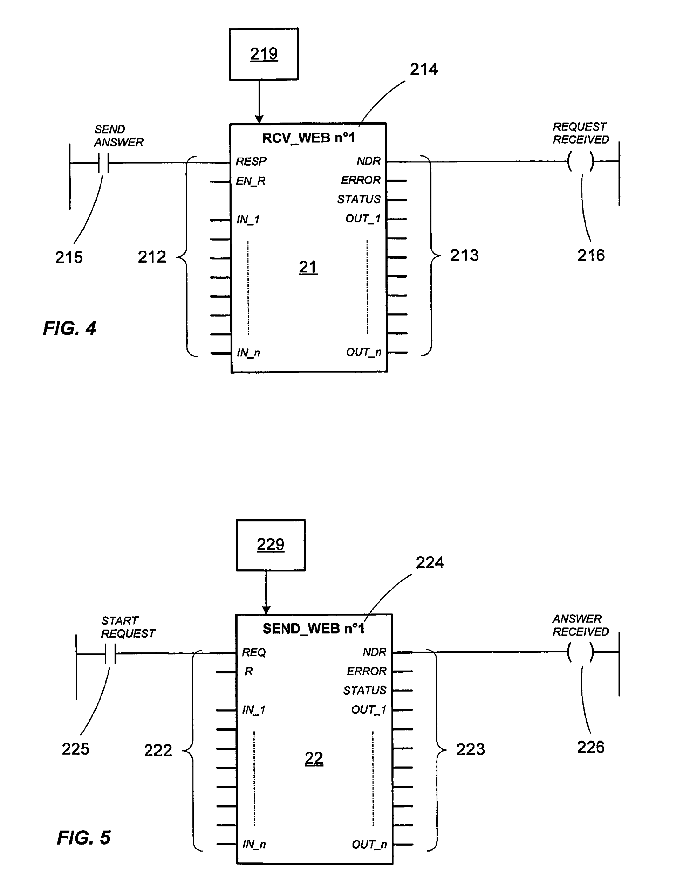

Selon l'invention, les blocs fonction WEB sont intégrés dans le programme application 20 qui peut être écrit dans un ou plusieurs langages conformes à la norme IEC1131-3. Les blocs fonction WEB sont inspirés des blocs fonction de communication définis dans la norme IEC1131-5, mais de tels blocs fonction WEB ne sont pas décrits dans la norme. Ainsi, dans les figures 4 et 5, un bloc fonction WEB réception 21 et un bloc fonction WEB émission 22 sont symbolisés graphiquement avec le formalisme d'un langage de type schémas à contacts (Langage LADDER). Ils comportent un nom de service ou identification 214,224 et sont dotés de paramètres d'entrée 212,222 et de paramètres de sortie 213,223 qui sont connectés logiquement avec des éléments du programme application 20, telles que les variables 215,216,225,226. Les paramètres d'entrée 212,222 correspondent à des ordres ou à des commandes donnés par le programme application 20 au bloc fonction WEB 21,22 et les paramètres de sortie 213,223 correspondent à des comptes-rendus ou à des résultats donnés par le bloc fonction WEB 21,22 au programme application 20.

En référence à un exemple de réalisation présenté en figure 4, les paramètres d'entrée 212 d'un bloc fonction WEB réception 21 comportent
- une entrée de type booléen RESP ("Respond") qui, au moment du passage à l'état VRAI, provoque l'envoi d'une réponse 52 à une requête 51. Dans l'exemple de la figure 4, cette entrée est connectée à un contact d'une variable du programme application 20 appelée SEND ANSWER 215, de telle sorte l'état de l'entrée RESP du bloc fonction WEB 21 est égal à l'état de cette variable SEND ANSWER,
- une entrée de type booléen EN_R ("Enable Receive") qui, lorsqu'elle est à l'état VRAI, valide la prise en compte de la réception d'une requête par le bloc fonction WEB 21,
- une ou plusieurs entrées IN_1 à IN_n contenant différents paramètres qui seront renvoyés dans la réponse 52 vers le client WEB émetteur de la requête 51.

De même, les paramètres de sortie 213 d'un bloc fonction WEB réception 21 comportent :
- une sortie de type booléen NDR ("New Data Received") qui, au moment du passage à l'état VRAI, signale au programme application 20 qu'une requête 51 vient d'être reçue par le bloc fonction WEB 21. Dans l'exemple de la figure 4, cette sortie est connectée à la bobine d'une variable du programme application 20 appelée REQUEST RECEIVED 216, de telle sorte l'état de cette variable REQUEST RECEIVED est égal à l'état de la sortie NDR du bloc fonction WEB 21,
- une sortie de type booléen ERROR indiquant que le bloc fonction WEB 21 est en erreur,
- une sortie de type entier STATUS donnant le dernier état valide du bloc fonction WEB 21,
- une ou plusieurs sorties OUT_1 à OUT_n qui sont chargées avec des paramètres contenus dans la requête 51.

En référence à un exemple de réalisation présenté en figure 5, les paramètres d'entrée 222 d'un bloc fonction WEB émission 22 comportent :
- une entrée de type booléen REQ qui, au moment du passage à l'état VRAI, provoque l'envoi d'une requête 51. Dans l'exemple de la figure 5, cette entrée est connectée à un contact d'une variable du programme application 20 appelée START REQUEST 225, de telle sorte l'état de l'entrée REQ du bloc fonction WEB 22 est égal à l'état de cette variable START REQUEST,
- une entrée de type booléen R qui permet de réinitialiser le bloc fonction WEB 22,
- une ou plusieurs entrées IN_1 à IN_n contenant des paramètres qui seront envoyés dans la requête 51 vers le serveur WEB destinataire.

De même, les paramètres de sortie 223 d'un bloc fonction WEB émission 22 comportent :
- une sortie de type booléen NDR qui, au moment du passage à l'état VRAI, signale au programme application 20 qu'une réponse 52 à la requête 51 vient d'être reçue par le bloc fonction WEB 22. Dans l'exemple de la figure 5, cette sortie est connectée à la bobine d'une variable du programme application 20 appelée ANSWER RECEIVED 226, de telle sorte l'état de cette variable ANSWER RECEIVED est égal à l'état de la sortie NDR du bloc fonction WEB 22,
- une sortie de type booléen ERROR indiquant que le bloc fonction WEB 22 est en erreur,
- une sortie de type entier STATUS donnant le dernier état valide du bloc fonction WEB 22,
- une ou plusieurs sorties OUT_1 à OUT_n qui sont chargées avec des paramètres renvoyés par le serveur WEB dans la réponse 52.

Un bloc fonction WEB 21,22 comporte un code programme générique qui est commun à chaque type de bloc fonction WEB, en l'occurrence bloc fonction WEB de type réception 21 et bloc fonction WEB de type émission 22. Un bloc fonction WEB 21,22 comporte aussi des données de configuration spécifiques 219,229, qui sont par exemple stockées dans un fichier de configuration propre à chaque bloc fonction WEB. Ces données de configuration 219,229 contiennent notamment :
- le nom du service ou identification qui tient lieu, dans le cas d'un bloc fonction WEB réception 21, d'adresse URL relative dans l'équipement d'automatisme 10 et qui permet à tout client WEB de l'identifier et de lui envoyer une requête,
- l'adresse URL destinataire dans le cas d'un bloc fonction WEB émission 22,
- le type de requête HTTP (appelé méthode HTTP) que le bloc fonction WEB 21,22 est capable d'émettre ou de recevoir (généralement des méthodes POST ou GET, mais aussi des méthodes PUT, DELETE, TRACE, OPTIONS,...),
- le contenu du message ou la localisation d'un message indexé (par exemple une page HTML, un message XML, ou autres) qui sera intégré dans la réponse 52 du bloc fonction WEB réception 21,
- dans le cas des données de configuration 229 d'un bloc fonction WEB émission 22, des moyens pour faire une correspondance entre d'une part les paramètres d'entrées IN_1,IN_n du bloc fonction WEB émission 22 et d'autre part des éléments d'une requête HTTP 51 (headers), des éléments d'une trame XML ou d'une trame URL encodé contenus dans une requête HTTP 51,
- dans le cas des données de configuration 229 d'un bloc fonction WEB émission 22, des moyens pour faire une correspondance entre d'une part des éléments d'une réponse HTTP 52 (headers) ou des éléments d'une trame XML contenus dans une requête HTTP 52 et d'autre part les paramètres de sorties OUT_1,OUT_n du bloc fonction WEB émission 22,
- dans le cas des données de configuration 219 d'un bloc fonction WEB réception 21, des moyens pour faire une correspondance entre d'une part des éléments d'une requête HTTP 51 (headers), des éléments d'une trame XML ou d'une trame URL encodé contenus dans une requête HTTP 51 et d'autre part les paramètres de sorties OUT_1,OUT_n du bloc fonction WEB réception 21,
- dans le cas des données de configuration 219 d'un bloc fonction WEB réception 21, des moyens pour faire une correspondance entre d'une part les paramètres d'entrées IN_1,IN_n du bloc fonction WEB réception 21 et d'autre part des éléments d'une réponse HTTP 52 (headers) ou des éléments d'une trame XML contenus dans une requête HTTP 52,
- le format des trames (appelé "Content Type") qu'un bloc fonction WEB sera en mesure de générer ou d'interpréter. Cet aspect est important car ainsi on autorisera la prise en compte des futures évolutions du WEB. En effet, grâce à ce paramétrage et à partir de protocoles stabilisés (HTTP et XML), il sera possible d'intégrer des librairies de données (schémas XML) de manière à pouvoir implémenter de nouveaux protocoles en évolution.

Les moyens pour faire une correspondance entre les paramètres d'entrées/sorties d'un bloc fonction et les éléments d'une trame XML, d'une trame URL ou d'une requête/réponse HTTP sont implémentés par le bloc fonction et peuvent faire appel à une sophistication variable suivant la flexibilité d'emploi désirée et la complexité du format à interpréter.

Pour une bonne compréhension de la présente invention, des exemples de moyens pour faire une correspondance sont décrits ci-après. Ces exemples se bornent à une implémentation simple, qui correspond au cas de blocs fonction capables de n'accepter qu'un format rigide de requête et de ne produire de même qu'un format rigide de réponse. Cependant l'état de l'art informatique permettrait aisément de produire, à partir de ce cas, des variantes plus sophistiquées, tant en ce qui concerne les formats de conversion entre les données de l'équipement d'automatisme et les données textuelles WEB qu'en ce qui concerne le format du document WEB lui-même.

Pour satisfaire les quatre cas évoqués ci-dessus, les moyens pour faire une correspondance s'appuient sur deux mécanismes :
a) l'analyse d'une trame entrante (réponse ou requête reçue) pour en extraire les paramètres de sorties OUT_1,OUT_n du bloc fonction. Cette analyse s'appuie sur une description de la trame permettant de retrouver la place des paramètres et, pour chaque paramètre, une description de la conversion entre le format textuel contenu dans la requête et le format interne de l'équipement d'automatisme. Ce cas s'applique aussi bien à l'émission d'une requête par un bloc fonction WEB émission qu'à l'émission d'une réponse par un bloc fonction WEB réception.
b) la synthèse d'une trame à émettre (requête ou réponse à émettre) à partir des paramètres d'entrée IN_1,IN n du bloc fonction. Cette synthèse utilise également deux types d'éléments : une trame-type et des règles de substitution permettant d'insérer la valeur des paramètres.

La configuration d'un bloc fonction donné comporte donc deux parties spécifiquement allouées à l'analyse et à la synthèse.

Exemple de la description de conversion pour une requête entrante dans un bloc fonction WEB réception formaté selon le langage XML :

```
              <?xml version="1.0"?>
              <!DOCTYPE tag1 SYSTEM "exemple.dtd">
              <surveillance>
                  <type>%OUT_1:STRING</type><br />
                  <num_requete>%OUT_2:INT</num_requete>
              </surveillance>
```

Lors du démarrage de l'application, le code programme du bloc fonction analyse cette description et enregistre la correspondance entre les zones du document attendu (à l'intérieur des tags : <type> et <num_requete>, eux-mêmes inclus dans un tag <surveillance>) et les paramètres du bloc fonction.
Sur réception de la requête suivante :

```
              <?xml version="1.0"?>
              <!DOCTYPE tag1 SYSTEM "exemple.dtd">
              <surveillance>
                  <type>alarme</type><br />
                  <num_requete>58</num_requete>
              </surveillance>
```

le code programme du bloc fonction positionne les paramètres de sortie indiqués : OUT_1 = "alarme", OUT_2 = 58.

Exemple de la description de conversion pour la réponse à émettre dans un bloc fonction WEB réception :

```
              <?xml version="1.0"?>
              <!DOCTYPE tag1 SYSTEM "exemple.dtd">
              <notification>
                  <numero>%IN_1:INT</numero>
                  <contenu>
                    <validite>%IN_2:BOOL</validite>
                    <message>%IN_3:STRING</message>
                  </contenu>
                  <code_demandeur>%IN_4:INT</code_demandeur>
                  <num_requete>%IN_5:INT <num_requete>
            </notification>
```

Lors du démarrage de l'application, le code programme du bloc fonction enregistre cette description ainsi que les emplacements où il devra incruster les valeurs des paramètres d'entrées ainsi que l'adresse de ces paramètres d'entrées dans la mémoire de l'équipement d'automatisme.

Lors de l'activation de la réponse par le programme application, il convertit les paramètres d'entrées IN_1 à IN_5 et insère le résultat de cette conversion aux emplacements mémorisés puis provoque l'envoi de la réponse en appelant une fonction de la partie générique d'un bloc fonction WEB.

Ainsi, pour des valeurs courantes telles que : IN_1 = 2 , IN_2 = true , IN_3 = "Alarme temperature", IN_4 = 1234 , IN_5 = 58 , il est aisé de générer le document de réponse suivant :

```
              <?xml version="1.0"?>
              <!DOCTYPE tag1 SYSTEM "exemple.dtd">
              <notification>
                  <numero>2</numero>
                  <contenu>
                      <validite>true</validite>
                      <message>alarme temperature</message>
                  </contenu>
                  <code_demandeur>1234</code_demandeur>
                  <num_requete>58<num_requete>
              </notification>
```

Comme déjà précisé ci-dessus, l'exemple est simple mais on pourra utiliser des représentations plus flexibles par exemple :
- Contrôle de la conversion des données, par exemple en utilisant le formalisme du langage C (printf et scanf);
- Contrôle de la validité et du format d'un document reçu, par exemple en utilisant un analyseur au format SAX ou DOM, ou XSL-T;
- Génération d'un document à forme variable, en utilisant les valeurs des paramètres d'entrée IN_x pour piloter une transformation XSL-T.

La conception d'un programme application se fait habituellement grâce à une station de programmation qui offre notamment toutes les fonctionnalités de lecture/écriture d'un programme application d'automatisme, de chargement/déchargement dans un équipement d'automatisme et de surveillance/visualisation de son déroulement dans l'équipement d'automatisme. Un des avantages de la présente invention réside dans le fait que l'intégration des blocs fonction WEB dans le programme application 20 est immédiate puisque le raccordement des blocs fonction WEB aux instructions du programme application 20 se fait directement avec la station de programmation qui permet d'écrire ce programme application. Au moyen d'une telle station de programmation, le concepteur d'un programme application est donc susceptible de visualiser, de modifier, d'insérer ou de supprimer des blocs fonction WEB 21,22 sans connaissance particulière autres que celles lui permettant de concevoir le programme application 20, ce qui facilitera grandement l'ouverture des communications WEB aux applications d'automatisme.

La station de programmation peut paramétrer directement sous forme textuelle les données de configuration 219,229 des blocs fonction WEB 21,22, les rendant aussi facilement accessibles au concepteur du programme application. On peut, par exemple, envisager que les données de configuration 219,229 soient visualisables en langage clair et modifiables dans une fenêtre spécifique, s'ouvrant quand le concepteur pointe sur la représentation graphique d'un bloc fonction WEB dans la station de programmation.

De plus, la station de programmation peut utiliser des librairies de blocs fonction WEB préconfigurés, mémorisables et manipulables à partir de la station de programmation et offrant des jeux de blocs fonction WEB spécialisés dans un type de contenu et/ou un protocole implémenté à l'aide de HTTP. Parmi les exemples pouvant être inclus dans de telles librairies, on peut citer : un bloc fonction serveur HTML, un bloc fonction serveur WML, un bloc fonction client ou serveur SOAP, etc.... Ainsi, ces librairies facilitent le travail d'un concepteur en lui proposant plusieurs blocs fonction préconfigurés, qu'il peut insérer et instancier rapidement dans son programme application.

Quand une requête 51 est reçue par un équipement d'automatisme 10, l'interface HTTP 15 de l'équipement d'automatisme 10 l'analyse et détecte si l'adresse URL destinataire contenue dans la requête 51 correspond à l'adresse URL d'un bloc fonction WEB réception 21 de l'équipement d'automatisme 10. Si tel est le cas, l'interface HTTP 15 joue le rôle de serveur HTTP en faisant l'acheminement et en signalant au bloc fonction WEB réception 21 l'arrivée de la requête 51. L'adresse URL de l'expéditeur de la requête 51 est mémorisée pour être en mesure de renvoyer la réponse 52 qui sera élaborée par le bloc fonction WEB réception 21.

Quand une requête 51 est émise par un bloc fonction WEB émission 22 d'un équipement d'automatisme 10, l'interface HTTP 15 de cet équipement d'automatisme joue le rôle de client HTTP et achemine la requête vers l'adresse URL destinataire contenue dans la requête 51.

Il est bien entendu que l'on peut, sans sortir du cadre de l'invention, imaginer d'autres variantes et perfectionnements de détail et de même envisager l'emploi de moyens équivalents.

## Revendications

1. Système de communication d'un équipement d'automatisme (10) sur un réseau TCP/IP (50), lequel équipement d'automatisme (10) contrôle une application d'automatisme en déroulant un programme application (20) écrit dans un ou plusieurs langages conformes à la norme IEC1131-3, où le système de communication comprend :
- une fonction serveur WEB implémentée à l'intérieur du programme application (20),
- des moyens d'échanges comprenant au moins un bloc fonction WEB réception (21) et au moins un bloc fonction WEB émission (22) qui sont intégrés dans le programme application (20) et qui interagissent avec le programme application (20),
- une interface HTTP (15) dans l'équipement d'automatisme (10) capable de faire l'acheminement des messages provenant du réseau TCP/IP (50) vers un bloc fonction WEB réception (21) identifié par une adresse URL, et de faire l'acheminement des messages provenant d'un bloc fonction WEB émission (22) vers une adresse URL sur le réseau TCP/IP (50)
le système de communication étant **caractérisé en ce qu'**il comprend également:
- une fonction client WEB implémentée a l'intérieur du programme application.

2. Système de communication selon la revendication 1, **caractérisé par le fait qu'**un bloc fonction WEB (21,22) comprend un code programme générique ainsi que des données de configuration (219,229) qui sont spécifiques à chaque bloc fonction WEB.

3. Système de communication selon la revendication 2, **caractérisé par le fait que** les données de configuration (219,229) d'un bloc fonction WEB (21,22) incluent le format général des trames échangées par le bloc fonction WEB (21,22), le type de requête HTTP que le bloc fonction WEB (21,22) reçoit ou émet et l'adresse URL relative du bloc fonction WEB (21,22) dans l'équipement d'automatisme (10).

4. Système de communication selon la revendication 2, **caractérisé par le fait qu'**un concepteur du programme application (20) est capable de configurer sous forme textuelle les données de configuration (219,229) des blocs fonction WEB (21,22) intégrés dans un programme application (20).

5. Système de communication selon la revendication 2, **caractérisé par le fait que** les données de configuration (219) d'un bloc fonction WEB réception (21) contiennent des moyens pour faire une correspondance entre des éléments d'une requête HTTP (51) et les paramètres de sorties (OUT_1,OUT_n) du bloc fonction WEB réception (21) et pour faire une correspondance entre les paramètres d'entrées (IN_1,IN_n) du bloc fonction WEB réception (21) et des éléments d'une réponse HTTP (52).

6. Système de communication selon la revendication 2, **caractérisé par le fait que** les données de configuration (229) d'un bloc fonction WEB émission (22) contiennent des moyens pour faire une correspondance entre les paramètres d'entrées (IN_1,IN_n) du bloc fonction WEB émission (22) et des éléments d'une requête HTTP (51) et pour faire une correspondance entre des éléments d'une réponse HTTP (52) et les paramètres de sorties (OUT_1,OUT_n) du bloc fonction WEB émission (22).

7. Système de communication selon la revendication 2, **caractérisé par le fait que** le contenu d'une requête HTTP (51) ou d'une réponse HTTP (52) est une trame XML.

8. Système de communication selon la revendication 7, **caractérisé par le fait que** les données de configuration (219) d'un bloc fonction WEB réception (21) contiennent des moyens pour faire une correspondance entre des éléments d'une trame XML contenus dans une requête HTTP (51) et les paramètres de sorties (OUT_1.OUT_n) du bloc fonction WEB réception (21) et pour faire une correspondance entre les paramètres d'entrées (IN_1,IN_n) du bloc fonction WEB réception (21) et des éléments d'une trame XML contenus dans une réponse HTTP (52).

9. Système de communication selon la revendication 7, **caractérisé par le fait que** les données de configuration (229) d'un bloc fonction WEB émission (22) contiennent des moyens pour faire une correspondance entre les paramètres d'entrées (IN_1,IN_n) du bloc fonction WEB émission (22) et des éléments d'une trame XML contenus dans une requête HTTP (51) et pour faire une correspondance entre des éléments d'une trame XML contenus dans une réponse HTTP (52) et les paramètres de sorties (OUT_1,OUT_n) du bloc fonction WEB émission (22).

10. Système de communication selon la revendication 2, **caractérisé par le fait que** le contenu d'une requête HTTP (51) est une trame URL encodé.

11. Système de communication selon la revendication 10, **caractérisé par le fait que** les données de configuration (219) d'un bloc fonction WEB réception (21) contiennent des moyens pour faire une correspondance entre des éléments d'une trame URL encodé contenus dans une requête HTTP (51) et les paramètres de sorties (OUT_1,OUT_n) du bloc fonction WEB réception (21).

12. Système de communication selon la revendication 10, **caractérisé par le fait que** les données de configuration (229) d'un bloc fonction WEB émission (22) contiennent des moyens pour faire une correspondance entre les paramètres d'entrées (IN_1,IN_n) du bloc fonction WEB émission (22) et des éléments d'une trame URL encodé contenus dans une requête HTTP (51).

13. Equipement d'automatisme **caractérisé par le fait qu'**il contient un programme application qui intègre un système de communication sur un réseau TCP/IP selon l'une des revendications précédentes.

## Claims

1. Communication system for automation equipment (10) based on a TCP/IP network (50), which automation equipment (10) controls an automation application by running an application program (20) written in one or more languages in accordance with the IEC1131-3 standard, where the communication system comprises:
- a WEB server function implemented inside the application program (20),
- means of exchanges comprising at least one receive WEB function block (21) and at least one send WEB function block (22) which are integrated into the application program (20) and which interact with the application program (20),
- an HTTP interface (15) in the automation equipment (10) capable of forwarding the messages originating from the TCP/IP network (50) to a receive WEB function block (21) identified by a URL address, and of forwarding the messages originating from a send WEB function block (22) to a URL address on the TCP/IP network (50)
the communication system being **characterized in that** it also comprises:
- a WEB client function implemented inside the application program.

2. Communication system according to Claim 1, **characterized in that** a WEB function block (21,22) comprises a generic program code as well as configuration data (219,229) which are specific to each WEB function block.

3. Communication system according to Claim 2, **characterized in that** the configuration data (219,229) of a WEB function block (21,22) include the general format of the frames exchanged by the WEB function block (21,22), the type of HTTP request that the WEB function block (21,22) receives or emits and the relative URL address of the WEB function block (21,22) in the automation equipment (10).

4. Communication system according to Claim 2, **characterized in that** a designer of the application program (20) is capable of configuring in text form the configuration data (219,229) of the WEB function blocks (21,22) integrated into an application program (20).

5. Communication system according to Claim 2, **characterized in that** the configuration data (219) of a receive WEB function block (21) contain means for matching between elements of an HTTP request (51) and the output parameters (OUT_1,OUT_n) of the receive WEB function block (21) and for matching between the input parameters (IN_1,IN_n) of the receive WEB function block (21) and elements of an HTTP response (52).

6. Communication system according to Claim 2, **characterized in that** the configuration data (229) of a send WEB function block (22) contain means for matching between the input parameters (IN_1,IN_n) of the send WEB function block (22) and elements of an HTTP request (51) and for matching between elements of an HTTP response (52) and the output parameters (OUT_1,OUT_n) of the send WEB function block (22).

7. Communication system according to Claim 2, **characterized in that** the content of an HTTP request (51) or of an HTTP response (52) is an XML frame.

8. Communication system according to Claim 7, **characterized in that** the configuration data (219) of a receive WEB function block (21) contain means for matching between elements of an XML frame that are contained in an HTTP request (51) and the output parameters (OUT_1,OUT_n) of the receive WEB function block (21) and for matching between the input parameters (IN_1,IN_n) of the receive WEB function block (21) and elements of an XML frame that are contained in an HTTP response (52).

9. Communication system according to Claim 7, **characterized in that** the configuration data (229) of a send WEB function block (22) contain means for matching between the input parameters (IN_1,IN_n) of the send WEB function block (22) and elements of an XML frame that are contained in an HTTP request (51) and for matching between elements of an XML frame that are contained in an HTTP response (52) and the output parameters (OUT_1,OUT_n) of the send WEB function block (22).

10. Communication system according to Claim 2, **characterized in that** the content of an HTTP request (51) is an encoded URL frame.

11. Communication system according to Claim 10, **characterized in that** the configuration data (219) of a receive WEB function block (21) contain means for matching between elements of an encoded URL frame that are contained in an HTTP request (51) and the output parameters (OUT_1,OUT_n) of the receive WEB function block (21).

12. Communication system according to Claim 10, **characterized in that** the configuration data (229) of a send WEB function block (22) contain means for matching between the input parameters (IN_1,IN_n) of the send WEB function block (22) and elements of an encoded URL frame that are contained in an HTTP request (51).

13. Automation equipment **characterized in that** it contains an application program which integrates a TCP/IP network-based communication system according to one of the preceding claims.

## Patentansprüche

1. Kommunikationssystem eines Automatisierungsgeräts (10) über ein TCP/IP-Netzwerk (50), wobei das Automatisierungsgerät (10) eine Automatisierungsanwendung steuert, indem ein Anwendungsprogramm (20) abläuft, das in einer oder mehreren Sprachen gemäß der Norm IEC1131-3 geschrieben ist, wobei das Kommunikationssystem enthält:
- eine Webserver-Funktion, die innerhalb des Anwendungsprogramms (20) ausgeführt wird,
- Austauscheinrichtungen, die mindestens einen Web-Funktionsblock Empfang (21) und mindestens einen Web-Funktionsblock Senden (22) enthalten, die in das Anwendungsprogramm (20) integriert sind und mit dem Anwendungsprogramm (20) interagieren,
- einen HTTP-Schnittstelle (15) im Automatisierungsgerät (10), die fähig ist, das Weiterleiten der vom TCP/IP-Netzwerk (50) kommenden Mitteilungen zu einem durch eine URL-Adresse identifizierten Web-Funktionsblock Empfang (21) durchzuführen, und das Weiterleiten der von einem Web-Funktionsblock Senden (22) kommenden Mitteilungen zu einer URL-Adresse im TCP/IP-Netzwerk (50) durchzuführen,
wobei das Kommunikationssystem **dadurch gekennzeichnet ist, dass** es ebenfalls enthält:
- eine Webclient-Funktion, die innerhalb des Anwendungsprogramms ausgeführt wird.

2. Kommunikationssystem nach Anspruch 1, **dadurch gekennzeichnet, dass** ein Web-Funktionsblock (21, 22) einen generischen Programmcode sowie Konfigurationsdaten (219, 229) enthält, die für jeden Web-Funktionsblock spezifisch sind.

3. Kommunikationssystem nach Anspruch 2, **dadurch gekennzeichnet, dass** die Konfigurationsdaten (219, 229) eines Web-Funktionsblocks (21, 22) das allgemeine Format der vom Web-Funktionsblock (21, 22) ausgetauschten Rahmen, den Typ der HTTP-Anfrage, die der Web-Funktionsblock (21, 22) empfängt oder sendet, und die relative URL-Adresse des Web-Funktionsblocks (21, 22) im Automatisierungsgerät (10) umfassen.

4. Kommunikationssystem nach Anspruch 2, **dadurch gekennzeichnet, dass** ein Planer des Anwendungsprogramms (20) fähig ist, die Konfigurationsdaten (219, 229) der in ein Anwendungsprogramm (20) integrierten Web-Funktionsblöcke (21, 22) in Textform zu konfigurieren.

5. Kommunikationssystem nach Anspruch 2, **dadurch gekennzeichnet, dass** die Konfigurationsdaten (219) eines Web-Funktionsblocks Empfang (21) Einrichtungen enthalten, um eine Entsprechung zwischen Elementen einer HTTP-Anfrage (51) und den Parametern von Ausgängen (OUT_1, OUT_n) des Web-Funktionsblocks Empfang (21) herzustellen, und um eine Entsprechung zwischen den Parametern von Eingängen (IN_1, IN_n) des Web-Funktionsblocks Empfang (21) und Elementen einer HTTP-Antwort (52) herzustellen.

6. Kommunikationssystem nach Anspruch 2, **dadurch gekennzeichnet, dass** die Konfigurationsdaten (229) eines Web-Funktionsblocks Senden (22) Einrichtungen enthalten, um eine Entsprechung zwischen den Parametern von Eingängen (IN_1, IN_n) des Web-Funktionsblocks Senden (22) und Elementen einer HTTP-Anfrage (51) herzustellen, und um eine Entsprechung zwischen Elementen einer HTTP-Antwort (52) und den Parametern von Ausgängen (OUT_1, OUT_n) des Web-Funktionsblocks Senden (22) herzustellen.

7. Kommunikationssystem nach Anspruch 2, **dadurch gekennzeichnet, dass** der Inhalt einer HTTP-Anfrage (51) oder einer HTTP-Antwort (52) ein XML-Rahmen ist.

8. Kommunikationssystem nach Anspruch 7, **dadurch gekennzeichnet, dass** die Konfigurationsdaten (219) eines Web-Funktionsblocks Empfang (21) Einrichtungen enthalten, um eine Entsprechung zwischen Elementen eines XML-Rahmens, die in einer HTTP-Anfrage (51) enthalten sind, und den Parametern von Ausgängen (OUT_1, OUT_n) des Web-Funktionsblocks Empfang (21) herzustellen, und um eine Entsprechung zwischen den Parametern von Eingängen (IN_1, IN_n) des Web-Funktionsblocks Empfang (21) und Elementen eines XML-Rahmens herzustellen, die in einer HTTP-Antwort (52) enthalten sind.

9. Kommunikationssystem nach Anspruch 7, **dadurch gekennzeichnet, dass** die Konfigurationsdaten (229) eines Web-Funktionsblocks Senden (22) Einrichtungen enthalten, um eine Entsprechung zwischen den Parametern von Eingängen (IN_1, IN_n) des Web-Funktionsblocks Senden (22) und Elementen eines XML-Rahmens herzustellen, die in einer HTTP-Anfrage (51) enthalten sind, und um eine Entsprechung zwischen Elementen eines XML-Rahmens, die in einer HTTP-Antwort (52) enthalten sind, und den Parametern von Ausgängen (OUT_1, OUT_N) des Web-Funktionsblocks Senden (22) herzustellen.

10. Kommunikationssystem nach Anspruch 2, **dadurch gekennzeichnet, dass** der Inhalt einer HTTP-Anfrage (51) ein codierter URL-Rahmen ist.

11. Kommunikationssystem nach Anspruch 10, **dadurch gekennzeichnet, dass** die Konfigurationsdaten (219) eines Web-Funktionsblocks Empfang (21) Einrichtungen enthalten, um eine Entsprechung zwischen Elementen eines codierten URL-Rahmens, die in einer HTTP-Anfrage (51) enthalten sind, und den Parametern von Ausgängen (OUT_1, OUT_n) des Web-Funktionsblocks Empfang (21) herzustellen.

12. Kommunikationssystem nach Anspruch 10, **dadurch gekennzeichnet, dass** die Konfigurationsdaten (229) eines Web-Funktionsblocks Senden (22) Einrichtungen enthalten, um eine Entsprechung zwischen den Parametern von Eingängen (IN_1, IN_n) des Web-Funktionsblocks Senden (22) und Elementen eines codierten URL-Rahmens herzustellen, die in einer HTTP-Anfrage (51) enthalten sind.

13. Automatisierungsgerät, **dadurch gekennzeichnet, dass** es ein Anwendungsprogramm enthält, das ein Kommunikationssystem über ein TCP/IP-Netzwerk nach einem der vorhergehenden Ansprüche umfasst.
